# EUROPEAN PATENT APPLICATION

(11) **EP 3 885 084 A1**
(43) Date of publication of application: **29.09.2021**
(21) Application number: 20166256.6
(22) Date of filing: 27.03.2020
(51) Int. Cl.: B26B 19/38, B26B 21/40, G01F 15/075

(54) **SYSTEM AND METHOD FOR ASSISTING SHAVING**

(71) Applicant: Bic Violex S.A., 14569 Anoixi (GR)
(72) Inventor: KOMIANOS, Ioannis, 14569 ANOIXI (GR); CHRYSANTHAKOPOULOS, Nikolaos, 14569 ANOIXI (GR)
(74) Representative: Cabinet Beau de Loménie

(57) **Abstract**

A system for assisting shaving (10) comprising at least one sensor (12, 14, 16) configured to measure water flow delivered by a sink water delivery piping (13A) and/or to measure water temperature delivered by the sink water delivery piping (13A) and/or to detect a shaver rinsing occurrence and a unit (18) configured to collect data from the at least one sensor (12, 14, 16) and to provide shaving information on the basis of the data in order to optimize the rinsing of the shaver (15).

## Description

### TECHNICAL FIELD

The present disclosure relates to a system and a method for assisting shaving. For example the present disclosure may apply for shaving using a manual shaver, but may also by applied for shaving using electric shaver, for example wet electric shaver.

### BACKGROUND

Rinsing of manual shaver is usually carried out without specific care. However, the rinsing quality used during shaving may have an impact on both the water consumption and the shaving performance/skin care. Therefore a need exists to improve shaver rinsing.

### SUMMARY

In embodiments, a system for assisting shaving comprising at least one sensor configured to measure water flow delivered by a sink water delivery piping and/or to measure water temperature delivered by the sink water delivery piping and/or to detect a shaver rinsing occurrence and a unit configured to collect data from the at least one sensor and to provide shaving information on the basis of the data in order to optimize the rinsing of the shaver.

The system may be configured to measure/detect a single, two or three parameters among the water flow, water temperature, shaver rinsing occurrence. In the following, unless otherwise specified, "rinsing occurrence" should be understood as "shaver rinsing occurrence". Other parameters may be measured/detected.

The system may comprise a single or several sensors. A single sensor may measure/detect one or several parameters. For example, the system may comprise a single sensor for measuring water flow, a single sensor for measuring water temperature, and a single sensor for detecting rinsing occurrence, but no necessarily. The system may comprise other sensors for measuring/detecting other parameter. In the following, unless otherwise specified, "the sensor" should be understood as "the at least one sensor".

The unit may be any electronic device or group of devices capable of collecting data from the sensor, wireless or not, processing the data, and providing shaving information. The unit may comprise a displayer configured to display the information and/or a transmission unit, for example wireless or not, in order to transmit the some or all of the information to another device capable of displaying said information. The unit may be configured to transmit wireless for example to a smart phone or the like (i.e. smart phone, tablet, smart speaker, computer, etc.) or to server or a cloud. Beside these data being useful for the user, the manufacturer may also collect the rinsing data per user in order to correlate them with the use of various shavers and propose to the user the optimum shaver type for optimum rinsing performance or less water consumption. For example, the unit may be a base station receiving data from the sensor and transmitting shaving information to a smart phone or the like though an application. The unit may be a smart phone of the like which is configured, for example via an application, to wireless received data from the sensor, directly from the sensor or via an intermediate unit collecting data from the sensor and transmitting the data to the smart phone or the like.

Such a system is configured to collect and to process data relating to the shaver rinsing, and to provide to the user with information in order to improve the rinsing operation. For example, adjusting one or more of water flow, water temperature, rinsing frequency, rinsing duration to the optimum ones during shaving may lead to reduce the water consumption and/or may improve the shaving performance/skin care (e.g. less irritation, nicks, cuts, better fluidity and shaving comfort, better efficiency). For example less water or warmer water (as in general warmer water may accelerate the rinsing of shaving debris) may be enough in order to remove a same predetermined amount of foam/skin/hair debris located between the blades of the shaver, leading thus to a reduction of the water consumption. Cleaner blades may improve shaving performance/skin care.

In embodiments, the at least one sensor may comprise at least a first sensor configured to be mounted onto a sink water delivery piping and to measure water flow and/or water temperature delivered by the sink water delivery piping.

For example, a sink water delivery piping may be a spout or a nozzle of a faucet.

For example, a first sensor of a first type may be a mechanical, pressure-based, optical, vortex, ultrasonic, electromagnetic etc. sensor capable of measuring water flow while a first sensor of a second type may be a thermocouple sensor for measuring water temperature.

In embodiments, the at least one sensor may comprise at least a second sensor configured to be mounted onto a faucet and/or a sink and to detect a shaver rinsing occurrence.

For example, the second sensor may be an infrared, magnetic, optical, etc. sensor capable of sensing the positioning of the shaver under the water flow to be rinsed.

In embodiments, the at least one sensor may be configured to provide real time data.

In embodiments, the system may comprise a shaver (or electronic smart shaver) configured to provide shaving data to the unit.

For example, the shaver may provide data indicating the number of strokes carried out by the user since the last rinsing and/or the wear condition of the blades and/or the clogging condition between the blades, etc.

In embodiments, the unit may be configured to provide real time shaving information.

In some embodiments, shaving information may comprise at least one real time signal relating to one or more of increasing/decreasing water temperature, increasing/decreasing water flow, increasing/decreasing shaver rinsing frequency, increasing/decreasing shaver rinsing duration occurrence and replacing the shaver/shaver cartridge.

The shaver rinsing frequency may correspond to the elapsed time between two rinsing occurrences or may correspond to the number of shaving strokes carried out between two rinsing occurrences. The replacement of the shaver/shaver cartridge may correspond to a signal indicating that the shaver/shaver cartridge is worn and needs to be replaced by a new one to improve shaving (and rinsing) efficiency or may correspond to a signal indicating that another type of shaver, for example having a specific geometry design, better adapted to the user habits (and thus more efficient for the user habits, for example rinsing habits) should be used.

In embodiments, a method for assisting shaving comprising a first step of measuring rinse water flow and/or measuring rinse water temperature and/or detecting a shaver rinsing occurrence and a second step of providing shaving information on the basis of the data collected during the first step.

The method may be carried out irrespective of the way the user rinses its shaver, i.e. using a continuous flow of water during shaving or an intermittent flow of water flowing during rising episodes only. A user may make water flowing only during the rinsing episodes while shaving information may assist him in order to reduce water consumption during such episodes. Another user may let water continuously flowing during shaving, while shaving information may assist him in order to reduce total water consumption and/or advice to use more cautiously water during its shaving routine (e.g. using an intermittent flow of water flowing during rising episodes only).

In embodiments, the steps may be performed in real time during shaving.

In embodiments, shaving information may comprise at least one real time signal relating to one or more of increasing/decreasing water temperature, increasing/decreasing water flow, increasing/decreasing shaver rinsing frequency, increasing/decreasing shaver rinsing duration occurrence and replacing the shaver/shaver cartridge.

In embodiments, a computer program includes instructions for executing the steps of the method according to any one of the embodiment of the present disclosure when the program is executed by a computer.

The program may use any programming language and may take the form of source code, object code or a code intermediate between source code and object code, such as a partially compiled form, or any other desirable form.

In embodiments, a recording medium readable by a computer has recorded thereon a computer program including instructions for executing the steps of the method according to any one of the present disclosure.

The recording medium may be any entity or device capable of storing the program. For example, the medium may include storage means such as a ROM, for example a CD ROM or a microelectronic circuit ROM, or magnetic storage means, for example a diskette (floppy disk) or a hard disk. Alternatively, the recording medium may be be an integrated circuit in which the program is incorporated, the circuit being adapted to execute the method in question or to be used in its execution.

Such systems and methods for assisting shaving may lead to reduce the water consumption and/or improve the shaving performance/skin care.

### BRIEF DESCRIPTION OF THE DRAWINGS

The disclosure can be better understood by reading the detailed description of various embodiments given as non-limiting examples. The description refers to the accompanying sheets of figures, in which:
- Figure 1 shows system for assisting shaving, and
- Figure 2 shows the steps of a method for assisting shaving.

### DETAILED DESCRIPTION

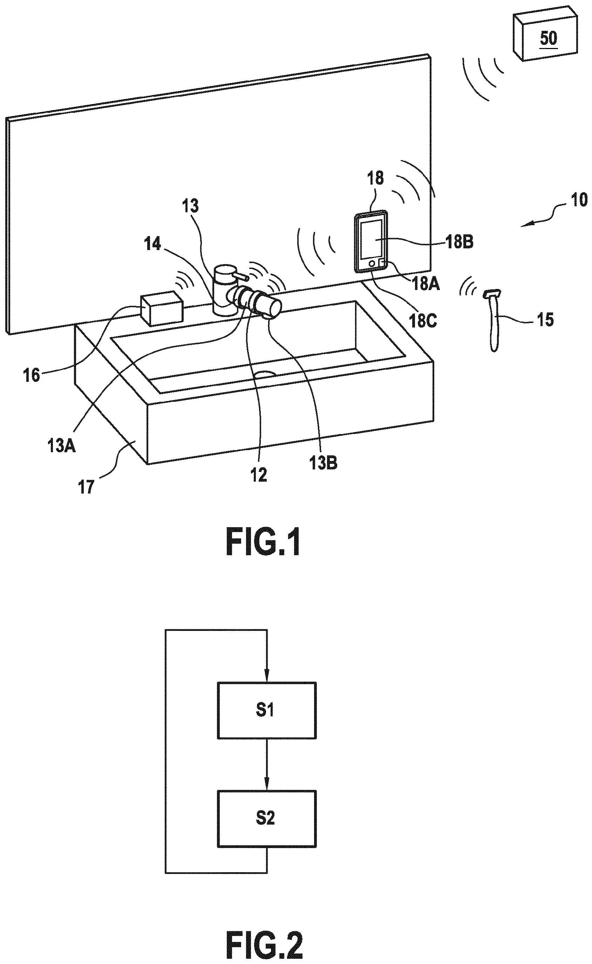

An embodiment of a system for assisting shaving 10 is described with reference to figure 1. The system 10 may comprise a first sensor 12 of a first type configured to measure water flow of water delivered by a faucet 13, a first sensor 14 of a second type configured to measure water temperature of water delivered by the faucet 13, a second sensor 16 configured to detect a shaver rinsing occurrence of a manual shaver 15 and a unit 18 which may be a smart phone, configured to collect data from the sensors 12, 14 and 16 and to provide shaving information on the basis of the data in order to optimize the rinsing of the shaver 15.

The sensor 12 and the sensor 14 may be mounted onto a sink water delivery piping of the faucet 13, for example onto the spout 13A of the faucet 13. The sensor 16 may be mounted on the sink 17. In this example, the sensor 16 may be simply placed onto a surface of the sink 17, for example adjacent to the faucet 13 and oriented toward the outlet 13B of the faucet 13. The sensors 12, 14 and 16 may be removably mounted onto the sink water delivery piping 13A and/or the sink 17. In a not shown variant, one, two or the three sensors (i.e. at least one sensor) may be configured to replace the water filter part screwed at the outlet of the faucet.

The sensor 12 may be an ultrasonic or an electromagnetic sensor having a shape of a ring or the like configured to be engaged around a spout of a faucet. The sensor 12 may be wireless connected to the smart phone 18 and configured to provide data to the smart phone 18 in real time.

The sensor 14 may be a thermocouple sensor having a shape of a ring or the like configured to be engaged around a spout of a faucet. The sensor 14 may be wireless connected to the smart phone 18 and configured to provide data to the smart phone 18 in real time.

The sensor 16 may be an optical sensor configured to be stably placed onto a planar surface of a sink. The sensor 16 may be wireless connected to the smart phone 18 and configured to provide data to the smart phone 18 in real time.

The shaver 15 may be configured to provide shaving data to the smart phone 18. Such a shaver is known by the skilled person and is not described in detail. In a variant which is not shown, a standard shaver (i.e. not configured to provide shaving data) may be used.

The smart phone 18 may comprise a recording medium 18A readable by a computer and may have recorded thereon a computer program including instructions for executing the steps of the method described hereafter. In other words, the smart phone 18 may include an application, as a computer program including instructions for executing the steps of the method described hereafter when the program is executed by a computer (in this example the smart phone 18).

The smart phone 18 may be configured to receive data from the sensors 12, 14 and 16 in real time, to process the data, and to provide shaving information in real time, for example visual information via a screen 18B or acoustic information via a speaker 18C. The shaving information may comprise real time signal relating to increasing/decreasing water temperature, increasing/decreasing water flow, increasing/decreasing shaver rinsing frequency, increasing/decreasing shaver rinsing duration occurrence and replacing the shaver/shaver cartridge.

The smart phone 18 may be configured to wireless provide the data and/or the information to a server or a cloud 50.

An embodiment of a method for assisting shaving, using the system 10, is described with reference to figure 2.

The method may comprise a first step S1 of measuring rinse water flow, measuring rinse water temperature and detecting a shaver rinsing occurrence, in real time.

The first step S1 may be carried out with the help of the sensor 12, in order to measure the flow of water delivered by the faucet 13 via the spout 13A, with the help of the sensor 14, in order to measure the temperature of the water delivered by the faucet 13 via the spout 13A, and with the help of the sensor 16 in order to detect whether the shaver 15 is placed under the outlet 13B (which is usually done for rinsing).

The first step S1 may also comprise receiving shaving data from the shaver 15, such as the number of strokes carried out by the user since the last rinsing, the wear condition of the blades and the clogging between the blades. If a standard shaver is used, the method may be configured to not taking into account such parameters.

The method comprises a second step S2 of providing shaving information on the basis of the data collected during the first step S1, in real time. For example, the shaving information may result from a preset standard shaving model and/or from design/nominal value for some or each parameters associated to the shaver 15 (preset and known by the system or directly provided by the shaver 15.

The second step S2 may be carried out by displaying visual signal(s) on the screen 18B and/or emitting acoustic signal(s) via the speaker 18C.

For example, if the water is too cold, providing hotter water may help improving rinsing efficiency and reducing water consumption. For example, if the water is too hot, providing colder water may help saving hot water while keeping the same level of rinsing efficiency. For example, adjusting the water flow to the one adapted to a standard shaver or to the exact design of the shaver 15 may help reducing water consumption. For example, if the user performs too many shaving strokes before rinsing, reducing the number of stroke between two successive rinsing may improve the rinsing efficiency and save water. This data may be provided by the shaver 15, or if a standard shaver is used, this data may be estimated on the basis of an average model of shaving habits. For example, if the user performs too few shaving strokes before rinsing, increasing the number of stroke between two successive rinsing may lead to an optimal rinsing occurrence. Improving rinsing may also provide better shaving performance/skin care.

Although the present invention is described with reference to specific examples, it is clear that modifications and changes may be made to these examples without going beyond the general scope of the invention as defined by the claims. In particular, individual characteristics of the various embodiments shown and/or mentioned may be combined in additional embodiments. Consequently, the description and the drawings should be considered in a sense that is illustrative rather than restrictive.

Additionally, all of the disclosed features of an apparatus may be transposed, alone or in combination, to a method and vice versa.

## Claims

1. A system for assisting shaving (10) comprising at least one sensor (12, 14, 16) configured to measure water flow delivered by a sink water delivery piping (13A) and/or to measure water temperature delivered by the sink water delivery piping (13A) and/or to detect a shaver rinsing occurrence and a unit (18) configured to collect data from the at least one sensor (12, 14, 16) and to provide shaving information on the basis of the data in order to optimize the rinsing of the shaver (15).

2. The system for assisting shaving (10) according to claim 1, wherein the at least one sensor comprises at least a first sensor (12, 14) configured to be mounted onto a sink water delivery piping (13A) and to measure water flow and/or water temperature delivered by the sink water delivery piping (13A).

3. The system for assisting shaving (10) according to claim 1 or 2, wherein the at least one sensor comprises at least a second sensor (16) configured to be mounted onto a faucet (13) and/or a sink (17) and to detect a shaver rinsing occurrence.

4. The system for assisting shaving (10) according to any one of claims 1 to 3, wherein the at least one sensor (12, 14, 16) is configured to provide real time data.

5. The system for assisting shaving (10) according to any one of claims 1 to 4, comprising a shaver (15) configured to provide shaving data to the unit (18).

6. The system for assisting shaving (10) according to any one of claims 1 to 5, wherein the unit (18) is configured to provide real time shaving information.

7. The system for assisting shaving (10) according to any one of claims 1 to 6, wherein shaving information comprises at least one real time signal relating to one or more of increasing/decreasing water temperature, increasing/decreasing water flow, increasing/decreasing shaver rinsing frequency, increasing/decreasing shaver rinsing duration occurrence and replacing the shaver/shaver cartridge.

8. A method for assisting shaving comprising a first step (SI) of measuring rinse water flow and/or measuring rinse water temperature and/or detecting a shaver rinsing occurrence and a second step (S2) of providing shaving information on the basis of the data collected during the first step.

9. The method for assisting shaving according to claim 8, wherein the steps (S1, S2) are performed in real time during shaving.

10. The method for assisting shaving according to claim 8 or 9, wherein shaving information comprises at least one real time signal relating to one or more of increasing/decreasing water temperature, increasing/decreasing water flow, increasing/decreasing shaver rinsing frequency, increasing/decreasing shaver rinsing duration occurrence and replacing the shaver/shaver cartridge.

11. A computer program including instructions for executing the steps (S1, S2) of the method according to any one of claims 8 to 10 when the program is executed by a computer.

12. A recording medium (18A) readable by a computer and having recorded thereon a computer program including instructions for executing the steps (S1, S2) of the method according to any one of claims 8 to 10.
